# EUROPEAN PATENT SPECIFICATION

(11) **EP 1 607 351 B1**
(45) Date of publication and mention of the grant of the patent: **20.10.2010**
(21) Application number: 03006618.7
(22) Date of filing: 25.03.2003
(51) Int. Cl.: B65G 47/52

(54) **Feeding System**
Zuführsystem
Système d'alimentation

(30) Priority: 25.03.2002 DK 200200454
(43) Date of publication of application: 21.12.2005
(73) Proprietor: Linco Food Systems A/S, 8380 Trige (DK)
(72) Inventor: Andersen, Claus, 8370 Hadsten (DK); Andersen, Torben, 8500 Grenaa (DK); Bang, Michael, 8680 Ry (DK); Ovesen, Henrik, 8400 Ebeltoft (DK)
(74) Representative: Gregersen, Niels Henrik

(56) References cited:
- EP-A- 0 395 178
- WO-A-91/09799
- WO-A-95/21375
- WO-A-98/49083
- DE-A1- 2 548 988

## Description

### Field of the invention

The present invention relates to a feeding system for feeding of items, by way of example chicken parts, from one belt conveyor to another belt conveyor, and of the type specified in the preamble of claim 1.

### Background of the invention

Known feeding systems of this type, by which the items are normally transferred from a first belt conveyor to a second belt conveyor via a weighing conveyor, which for control cooperates with a sorting belt conveyor coupled to its outlet end, comprise a special feeding unit for the active transfer of the items, said feeding unit consisting of a rotor or a short endless belt conveyor having "scraper plates" which are moved perpendicularly to said first belt conveyor, and which are adapted to actively scrape or push the items onto the second belt conveyor. Said carrier plates are located at an angle in relation to the conveying direction so that said "scraper plates" of the feeding unit are allowed as long time as possible for scraping or pushing the items onto the second belt conveyor.

The fact that the carrier plates are located at an angle in relation to the conveying direction implies several disadvantages. Belt conveyors are used consisting of relatively short, broad chain links, where it is difficult to fasten the carrier plates, in that these, for redirection between the upper and lower courses of the conveyor, only can be fastened to one chain link, that is the "loose" projecting parts of the carrier plates, extending over a neighbouring link, often only cause trouble, because their movement is uncontrollable. Furthermore, the existence of angularly arranged carrier plates with projecting "loose" parts, which extend across several chain links in the conveying direction, renders it impossible for the belt conveyor to be able to be guided upwards, by way of example across machinery parts or passageways. Swinging at the horizontal plane of belt conveyors having such angularly arranged carrier plates with projecting "loose" parts is likewise troublesome and space-demanding because it requires very large swing diameters.

WO 91/09799 A1 discloses a machine for pushing products laterally on a conveyor and particularly in the preferred form to a tray loading machine including paddles pivotally mounted to spaced horizontally arranged chains located above the conveyor. A cam track arranged above the chains is engaged by cam followers mounted on the paddles. The chains are mounted at an angle relative to the conveyor. The paddles are moved by the chains to move longitudinally at the same speed as the product on the conveyor while being held parallel to the movement direction of the conveyor by the followers engaging the cam track to thus simultaneously move laterally across the conveyor to push groups of products located intermediate lugs on the conveyor.

### Purpose of the invention

It is the object of the invention to provide a feeding system of the type mentioned in the introduction, and which in a simple way makes it possible to avoid the above-mentioned disadvantages.

### Brief description of the invention

The feeding system according to the invention is **characterised in that** said first belt conveyor is arranged at an angle in relation to a feeding end of said weighing conveyor or said second belt conveyor in the range of 5° to 45°, preferable about 20°, depending of the width of said first belt conveyor and the mutual distance between said carrier plates, and that the speed of movement respectively of said first belt conveyor and of said feeding unit are adjusted to a transfer frequency in the range of 3 to 5 items per second.

In a simple way it is hereby ensured high capacity of the feeding system and at the same time that the necessary time is allowed for said plate-shaped scrapers of the feeding unit to feed the items from said first belt conveyor, even though this is divided into "compartments" by means of carriers, which, with mutual distance, extend primarily perpendicularly to the conveying direction of said first belt conveyor.

In this connection it should be mentioned that the actual angle between said first belt conveyor and the feeding end of said weighing conveyor or said second belt conveyor is product-specific, in that the angle for very small items will be app. 5° increasing to app. 45° for very large or long items, in that belt width and the mutual distance between the carrier plates of course also are of importance.

Alternatively, the feeding system according to the invention may be provided in such a way that said feeding unit consists of an endless belt conveyor having a guide control for said scraper plates, said guide control being adapted to also give scraper plates a motion component in the conveying direction of said first belt conveyor.

In order to ensure that the scraper plates will surely release the items to said weighing conveyor or said second belt conveyor, the feeding system according to the invention may be such provided that said feeding unit consists of an overhead, endless belt conveyor, which at an outer end part is designed with such an upwards directed, sloping course that the scraper plates are lifted off said weighing conveyor or said second belt conveyor. For the same purpose, it may be suitable that the conveying speed of said weighing conveyor or said second belt conveyor is slightly higher than the conveying speed of the feeding unit.

The feeding system according to the invention can further advantageously be such provided that in front of said first belt conveyor, a weighing conveyor is provided for registration of the weight of supplied chicken parts, that said first belt conveyor extends along a number of operator stations, by way of example for deboning and/or trimming of chicken parts for individual reception of chicken parts from the respective operator stations in the respective compartments between said carrier plates, and that said second weighing conveyor is adapted to register the weight of said separately received chicken parts from the respective operator stations. Hereby it becomes possible in a simple way to automatically check the production of the individual operator and check the output of individual production types and the total output of the production.

Suitably the feeding system according to the invention may further be such provided that each of said operator stations comprises a push-off device being adapted to push off produced chicken parts individually down into the respective compartments between said carrier plates of said first belt conveyor.

With a view to facilitate the production of so-called batches of products, it may furthermore be advantageous that the feeding system after said second weighing conveyor comprises a sorter conveyor having a number of push-off arms for the production of portions of products (batches) with a predefined weight.

In order to be able to handle a number of different operator functions, e.g. producing several different types of fillets or different types of deboning work, it may be appropriate that each of said operator stations comprises a number of receive openings each operated by its own push-off device for push-off of various chicken parts, e.g. whole breast fillets (butterfly fillets), half breast fillets, inner fillets, wings, or thigh fillets, down into the respective compartments between said carrier plates of said first belt conveyor.

### Description of the drawing

The invention is explained in more detail in the following with reference to the drawing in which
- Fig. 1: shows a plane view of a known feeding system having a first belt conveyor with a number of angularly arranged carrier plates,
- Fig. 2: shows a plane view of a not claimed embodiment of a feeding system,
- Fig. 3: shows a plane top view of a system with a preferred embodiment of a feeding system according to the invention,
- Fig. 4: shows a plane top view of a production line with a number of operator stations for deboning and/or trimming of chicken parts, comprising a preferred embodiment of a feeding system according to the invention,
- Fig. 5: shows a lateral view of the production line shown in Fig. 4,
- Fig. 6: shows a sectional view of two operator stations at each side of an operator- operated production line, and
- Fig. 7: shows a view, in partial section, seen from above of a part of an operator- operated production line.

### Detailed description of the invention

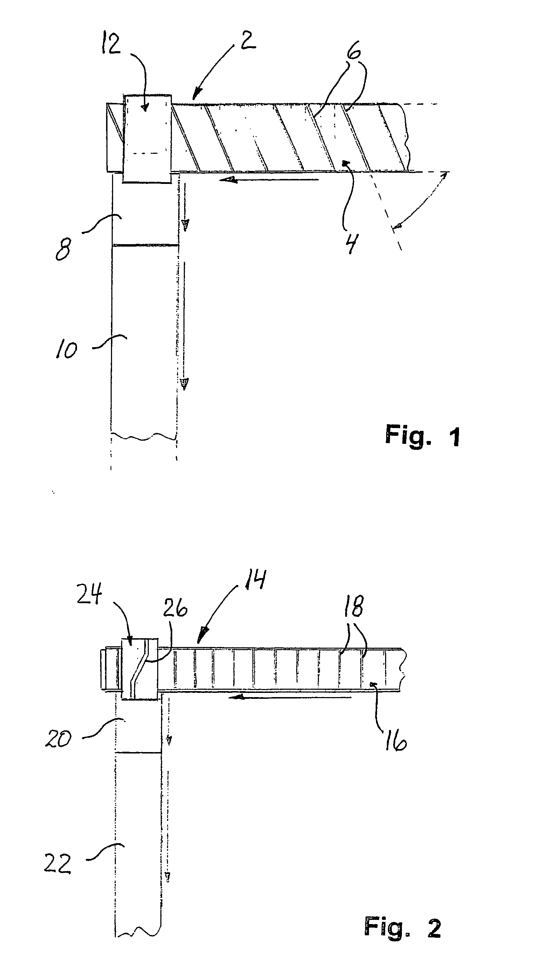

An embodiment of a known feeding system 2 is shown in Fig. 1, where a first belt conveyor 4 has raised carrier plates 6 being arranged at an angle of app. 70° in relation to the conveying direction of the belt conveyor 4 having a course perpendicular to a weighing conveyor 8 and a second belt conveyor 10. In the transition zone between the first belt conveyor 4 and the weighing conveyor 8, a feeding unit 12 is located which in a known way is designed with a roller or an endless belt with plate-shaped scrapers which successively provide for the active scraping off and transfer of arriving items, by way of example chicken parts being placed between the carrier plates 6 of the belt conveyor 4, to the second belt conveyor 10 via the weighing conveyor 8. The purpose of the angular arrangement of the carrier plates 6 is to support the function of the plate scrapers of the feeding unit, whereby the scrapers are allowed a little longer time for carrying out the active transfer of the items to the weighing conveyor 8 in that the angular arrangement of the carrier plates 6 "delays" the arrival of these to the feeding unit 12.

In practice this however implies the disadvantage that the carrier plates are arranged at an angle in relation to the rotary joints between the individual links of the belt conveyor 4 because the individual belt links are normally very narrow, that is the carrier plates 6, which for redirection of the conveyor belt between the upper active course and the lower passive course, only can be fastened to a belt link. The fact that the carrier plates 6 have projecting "loose" end parts furthermore means that swinging at the horizontal plane is made difficult, and respectively, is very space-demanding. Finally it is a disadvantage that the projecting "loose" end parts of the carrier plates 6 renders upwards guiding of the belt conveyor 4 impossible, by way of example across machinery parts or passageways.

Fig. 2 shows an embodiment of a feeding system 14 where a first belt conveyor 16 is provided with carrier plates 18, which are mutually parallel, and which are located perpendicularly to the direction of conveying. The belt conveyor 16 is arranged at an angle in relation to a weighing conveyor 20 and a second belt conveyor 22, in that the belt conveyor 16, in the example shown in Fig. 2, is placed perpendicularly in relation to the weighing conveyor 20 and the belt conveyor 22 respectively. Thus, the belt conveyor 16 can have both upwards and downwards extending courses, that is it can with not problem be guided up over machinery parts and passageways, because the carrier plates 18, even with great lengths, can be fastened to only one belt link in their full length.

In the transition zone between the first belt conveyor 16 and the weighing conveyor 20 a feeding unit 24 is placed, which feeding unit is provided with an endless belt having plate-shaped scrapers, the movement of which across the first belt conveyor 16 is controlled by a special guide control 26, so that the plate scrapers hereby, as an alternative to the angular arrangement of the carrier plates 6, cf. Fig. 1, have better time for successively effecting the active scraping off and transferring arriving items, by way of example chicken parts being placed between the carrier plates 18 of the belt conveyor 16, to the second belt conveyor 22 via the weighing conveyor 20.

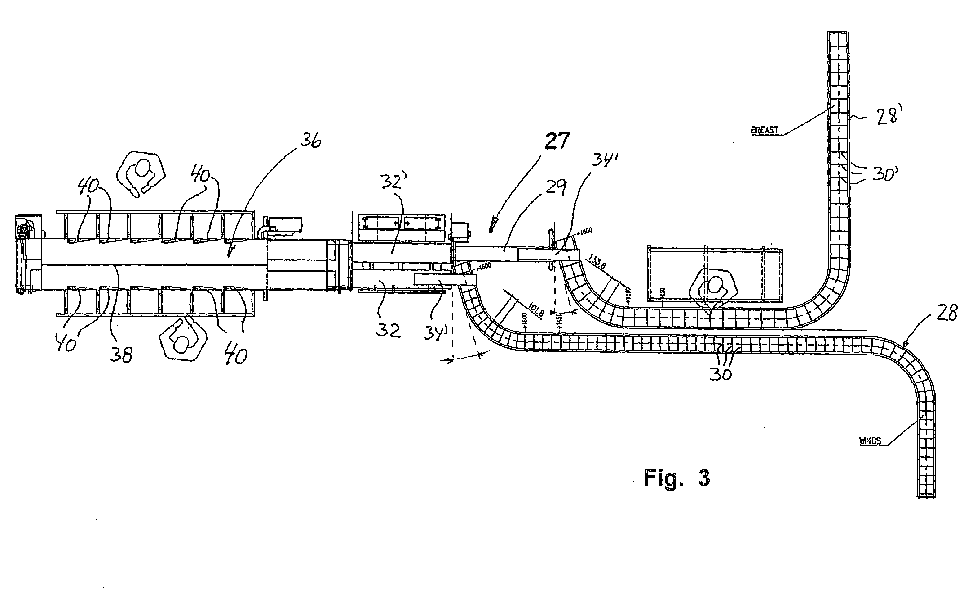

A preferred embodiment of a feeding system 27 according to the invention is shown in Fig. 3 which shows a plant which for space reasons is built together, and which is adapted to the production of portions of chicken parts, viz. wings, which are supplied via a first belt conveyor 28, and breast fillets, which are supplied via a first belt conveyor 28'. Both belt conveyors 28 and 28' are provided with mutually parallel carrier plates 30 and 30' so that the belt conveyors 28 and 28' with not problems, as shown, can be guided through both right and left turns at the horizontal plane.

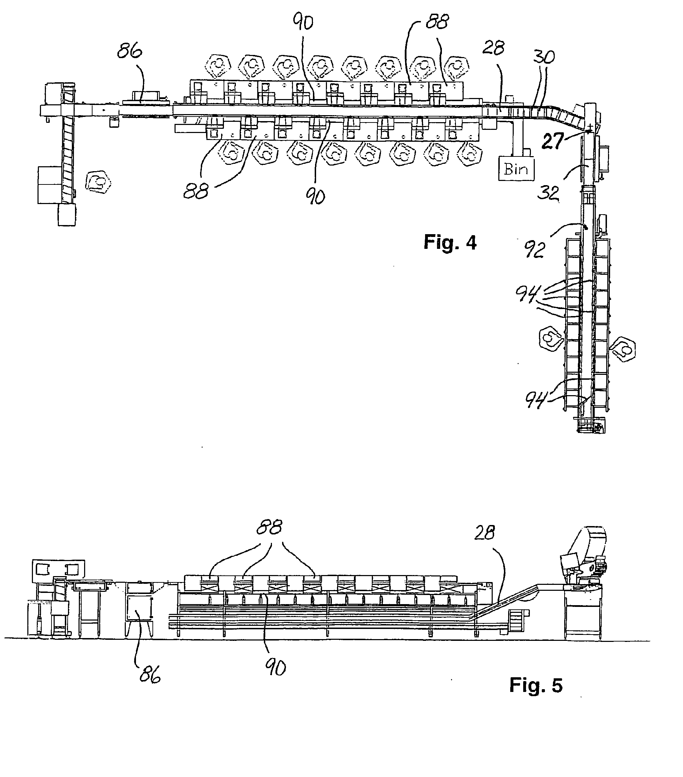

In the example shown in Fig. 3, the belt conveyor 28 arrives with wings to a weighing conveyor 32 at an angle of app. 15°, in practice this angle may vary from 5° to 25°. The belt conveyor 28' with breast fillets arrives at a corresponding angle of app. 15° to a weighing conveyor 32' via a small interlinked belt conveyor 29 at an extra high conveyance speed in order to speed up the arrival of the breast fillets to the weighing conveyor 32'. The transfer of wings and breast fillets respectively are effected by means of feeding units 34 and 34'. After the weighing conveyors 32 and 32' wings and breast fillets respectively are transferred to a cooperating sorter conveyor 36 having a central partition plate 38 and weight-controlled push-off arms 40 along both sides. Figs. 4 and 5 shows a plane top view and a plane lateral view of a plant section with a number of operator stations 88 for deboning and/or trimming of chicken parts comprising a preferred embodiment of a feeding system according to the invention, and where, in front of said first belt conveyor 28 a weighing conveyor 86 is provided for registration of the weight of supplied chicken bodies. Said first belt conveyor 28 is placed below said operator stations 88 for manual deboning and/or trimming of chicken parts, which are subsequently emptied individually by means of a number of push-off devices 90 at each operator station 88 down into the respective compartments between said carrier plates 30 of said first belt conveyor 28. The said second weighing conveyor 32 is adapted to register the weight of said individually received chicken parts from the respective operator stations 88, so that it is possible to check the actual production output from the respective operator stations 88.

It is furthermore an advantage that said feeding conveyor for the deboned/trimmed chicken parts is normally placed below the individual operator stations 88, so that the finished products can easily be conveyed both vertically and around corners, so that the mutual locations and distances between the operator stations, check, and sorter station are not of importance, and the change of belts is avoided, which includes the risk of losing orientation and placing of the product, that is errors in registration of the production by the individual operator are avoided.

The feeding system shown in Figs. 4 and 5 comprises a sorter conveyor 92 (grader) after the second weighing conveyor, said sorter conveyor having a number of push-off arms 94 for the production of portions of products (batches) with a predefined weight.

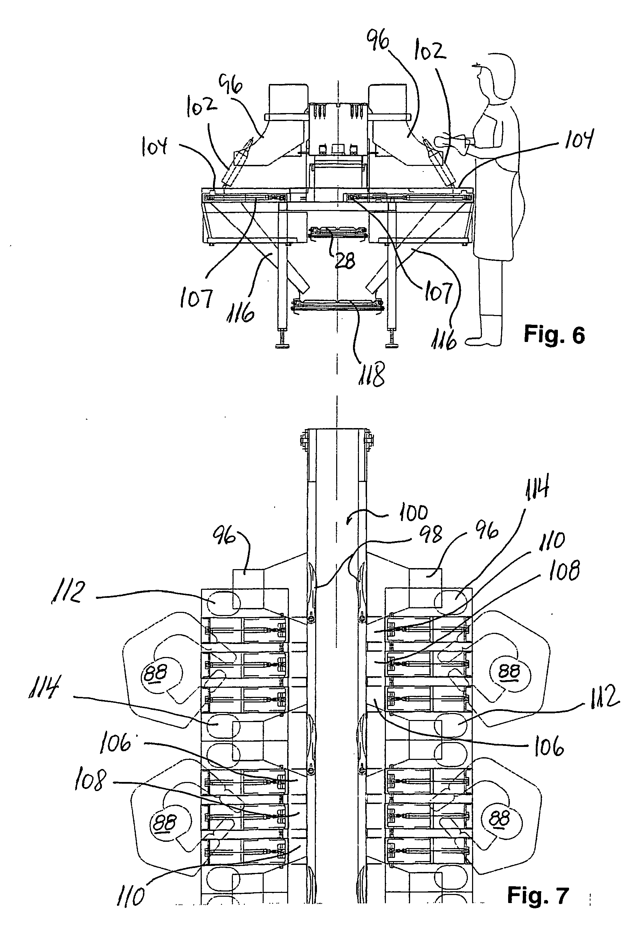

The operator stations 88 shown in Figs. 6 and 7 each comprises a reception container 96 in which a number of poultry bodies are pushed out by means of push-off arms 98 along opposite sides of a supply conveyor belt 100. The operator places the poultry body on a rotatable body holder 102 which projects slantingly upwards/inwards in relation to a table top 104. The table top 104 is shaped with three rectangular receive openings 106, 108, 110, each being operated by its own push-off device 107, 109, 111. These push-off devices are built-in under the table top 104. Fig. 6 shows a push-off device 107 at the left in its inactive initial position, while the push-off device 107 at the right is shown in its active pushed-out position, where it has just pushed out a chicken part down to said first conveyor belt 28. Apart from the receive openings 106, 108, 110, the table tope 104 for each operator station 88 is formed with two oval offal openings 112, 114, through which not directly usable chicken parts are emptied via chutes 116 to a lower conveyor belt 118, which for example conveys the "offal" to a meat/bone grinder.

The receive openings 106 can for example be intended for reception of whole breast fillets (butterfly fillets), receive opening 108 can be intended for reception of half breast fillets, and receive opening 110 can be intended for reception of inner fillets. Alternatively, the body holders 102 can be removed so that the operator station 88 can be used for deboning of drumsticks, where the drumstick fillet for example is delivered in the central receive opening 108.

## Claims

1. A feeding system (14, 27) for feeding of items, by way of example chicken parts, from a first belt conveyor (28) being provided with carrier plates (30), by way of example via a weighing conveyor (32) to a second belt conveyor (36), said feeding system (27) comprising a feeding unit (34') in the form of an endless belt conveyor having plate-shaped scrapers being adapted to be moved between said carrier plates (30) and to carry out the active successive transfer of items from said first belt conveyor (28) to said second belt conveyor (36), said carrier plates (30) of said first belt conveyor (28) extend primarily perpendicularly to the conveying direction of the conveyor, **characterised in that** said first belt conveyor (28) is arranged at an angle in relation to a feeding end of said weighing conveyor (32) or said second belt conveyor (36) in the range of 5° to 45°, preferable about 20°, depending of the width of said first belt conveyor (28) and the mutual distance between said carrier plates (30), and that the speed of movement respectively of said first belt conveyor (28) and of said feeding unit are adjusted to a transfer frequency in the range of 3 to 5 items per second.

2. A feeding system (14) according to claim 1, **characterised in that** said feeding unit (24) consists of an endless belt conveyor having a guide control (26) for said scraper plates, said guide control being adapted to also provide scraper plates with a motion component in the conveying direction of said first belt conveyor (28).

3. A feeding system according to claim 1, **characterised in that** said feeding unit consists of an overhead, endless belt conveyor, which at an outer end part is designed with such an upwards directed, sloping course that the scraper plates are lifted off said weighing conveyor (32) or said second belt conveyor.

4. A feeding system according to claim 1, **characterised in that** the conveying speed of said weighing conveyor (32) or said second belt conveyor (36) is slightly higher than the conveying speed of the feeding unit.

5. A feeding system according to claim 1, **characterised in that**, in front of said first belt conveyor (28), a weighing conveyor (86) is provided for registration of the weight of supplied chicken parts, that said first belt conveyor (28) extends along a number of operator stations (88), by way of example for deboning or trimming of chicken parts for individual reception of chicken parts from the respective operator stations (88) in the respective compartments between said carrier plates (30), and that said second weighing conveyor (32) is adapted to register the weight of said separately received chicken parts from the respective operator stations (88).

6. A feeding system according to claim 5, **characterised in that** each of said operator stations (88) comprises a number of push-off devices (90) being adapted to push off produced chicken parts individually down into the respective compartments between said carrier plates (30) of said first belt conveyor (28).

7. A feeding system according to claim 5, **characterised in that**, after said second weighing conveyor (32), it comprises a sorter conveyor (92) having a number of push-off arms (94) for the production of portions of products with a predefined weight.

8. A feeding system according to claims 5 and 6, **characterised in that** each of said operator stations comprises a number of receive openings each operated by its own push-off device for push-off of various chicken parts, by way of example whole breast fillets (butterfly fillets), half breast fillets, inner fillets, wings, or thigh fillets, down into the respective compartments between said carrier plates (30) of said first belt conveyor (28).

## Patentansprüche

1. Zuführungssystem (14, 27) zum Zuführen von Gegenständen, beispielsweise von Hähnchenteilen, von einer ersten Bandfördereinrichtung (28), die mit Trägerplatten (30) versehen ist, beispielsweise über eine Wiegefördereinrichtung (32) zu einer zweiten Bandfördereinrichtung (36), wobei das Zuführungssystem (27) eine Zuführungseinheit (34') in Form einer Endlosbandfördereinrichtung mit plattenförmigen Abstreifern umfasst, die so ausgelegt sind, dass sie zwischen den Trägerplatten (30) bewegt werden und das aktive aufeinander folgende Umladen von Gegenständen von der ersten Bandfördereinrichtung (28) zur zweiten Bandfördereinrichtung (36) ausführen, wobei sich die Trägerplatten (30) der ersten Bandfördereinrichtung (28) hauptsächlich senkrecht zur Förderrichtung der Fördereinrichtung erstrecken, **dadurch gekennzeichnet, dass** die erste Bandfördereinrichtung (28) unter einem Winkel in Bezug auf ein Zuführungsende der Wiegefördereinrichtung (32) oder der zweiten Bandfördereinrichtung (36) im Bereich von 5° bis 45°, vorzugsweise von etwa 20°, in Abhängigkeit von der Breite der ersten Bandfördereinrichtung (28) und des gegenseitigen Abstandes zwischen den Trägerplatten (30) angeordnet ist, und dass die Bewegungsgeschwindigkeit der ersten Bandfördereinrichtung (28) bzw. der Zuführungseinheit auf eine Umladefrequenz im Bereich von 3 bis 5 Gegenständen pro Sekunde eingestellt ist.

2. Zuführungssystem (14) nach Anspruch 1, **dadurch gekennzeichnet, dass** die Zuführungseinheit (24) aus einer Endlosbandfördereinrichtung mit einer Führungssteuerung (26) für die Abstreiferplatten besteht, wobei die Führungssteuerung dazu ausgelegt ist, auch Abstreiferplatten mit einer Bewegungskomponente in der Förderrichtung der ersten Bandfördereinrichtung (28) zu versehen.

3. Zuführungssystem nach Anspruch 1, **dadurch gekennzeichnet, dass** die Zuführungseinheit aus einer Hängeendlosbandfördereinrichtung besteht, die an einem äußeren Endteil mit einem solchen aufwärts gerichteten, geneigten Verlauf konstruiert ist, dass die Abstreiferplatten von der Wiegefördereinrichtung (32) oder der zweiten Bandfördereinrichtung abgehoben werden.

4. Zuführungssystem nach Anspruch 1, **dadurch gekennzeichnet, dass** die Fördergeschwindigkeit der Wiegefördereinrichtung (32) oder der zweiten Bandfördereinrichtung (36) geringfügig höher ist als die Fördergeschwindigkeit der Zuführungseinheit.

5. Zuführungssystem nach Anspruch 1, **dadurch gekennzeichnet, dass** vor der ersten Bandfördereinrichtung (28) eine Wiegefördereinrichtung (86) für die Registrierung des Gewichts von zugeführten Hähnchenteilen vorgesehen ist, dass sich die erste Bandfördereinrichtung (28) entlang einer Anzahl von Bearbeiterstationen (88), beispielsweise zum Entbeinen oder Zuschneiden von Hähnchenteilen, für die individuelle Aufnahme von Hähnchenteilen von den jeweiligen Bearbeiterstationen (88) in den jeweiligen Fächern zwischen den Trägerplatten (30) erstreckt, und dass die zweite Wiegefördereinrichtung (32) dazu ausgelegt ist, das Gewicht der separat aufgenommenen Hähnchenteile von den jeweiligen Bearbeiterstationen (88) zu registrieren.

6. Zuführungssystem nach Anspruch 5, **dadurch gekennzeichnet, dass** jede der Bearbeiterstationen (88) eine Anzahl von Herunterschiebevorrichtungen (90) umfasst, die dazu ausgelegt sind, produzierte Hähnchenteile einzeln in die jeweiligen Fächer zwischen den Trägerplatten (30) der ersten Bandfördereinrichtung (28) nach unten herunterzuschieben.

7. Zuführungssystem nach Anspruch 5, **dadurch gekennzeichnet, dass** es nach der zweiten Wiegefördereinrichtung (32) eine Sortierfördereinrichtung (92) mit einer Anzahl von Abschiebearmen (94) für die Produktion von Teilen von Produkten mit einem im Voraus definierten Gewicht umfasst.

8. Zuführungssystem nach den Ansprüchen 5 und 6, **dadurch gekennzeichnet, dass** jede der Bearbeiterstationen eine Anzahl von Aufnahmeöffnungen umfasst, die jeweils durch ihre eigene Herunterschiebevorrichtung zum Herunterschieben von verschiedenen Hähnchenteilen, beispielsweise ganzen Brustfilets (Schmetterlingsfilets), halben Brustfilets, inneren Filets, Flügeln oder Schenkelfilets, nach unten in die jeweiligen Fächer zwischen den Trägerplatten (30) der ersten Bandfördereinrichtung (28) betätigt werden.

## Revendications

1. Système d'alimentation (14, 27) pour alimenter des articles, à titre d'exemple des morceaux de poulet, à partir d'un premier transporteur à courroie (28) qui est prévu avec des plaques de support (30), à titre d'exemple via un transporteur de pesée (32) vers un deuxième transporteur à courroie (36), ledit système d'alimentation (27) comprenant une unité d'alimentation (34') se présentant sous la forme d'un transporteur à courroie sans fin ayant des racloirs en forme de plaque qui sont adaptés pour être déplacés entre lesdites plaques de support (30) et pour réaliser le transfert successif actif des articles à partir dudit premier transporteur à courroie (28) jusqu'audit deuxième transporteur à courroie (36), lesdites plaques de support (30) dudit premier transporteur à courroie (28) s'étendent principalement perpendiculairement à la direction de transport du transporteur, **caractérisé en ce que** ledit premier transporteur à courroie (28) est agencé selon un angle par rapport à une extrémité d'alimentation dudit transporteur de pesée (32) ou ledit deuxième transporteur à courroie (36) de l'ordre de 5° à 45°, de préférence environ 20°, en fonction de la largeur dudit premier transporteur à courroie (28) et de la distance mutuelle entre lesdites plaques de support (30), et **en ce que** la vitesse du mouvement respectivement dudit premier transporteur à courroie (28) et de ladite unité d'alimentation est ajustée pour une fréquence de transfert de l'ordre de 3 à 5 articles par seconde.

2. Système d'alimentation (14) selon la revendication 1, **caractérisé en ce que** ladite unité d'alimentation (24) se compose d'un transporteur à courroie sans fin ayant une commande de guidage (26) pour lesdites plaques de grattoir, ladite commande de guidage étant adaptée pour doter également les plaques de grattoir d'un composant de mouvement dans la direction de transport dudit premier transporteur à courroie (28).

3. Système d'alimentation selon la revendication 1, **caractérisé en ce que** ladite unité d'alimentation se compose d'un transporteur à courroie sans fin en hauteur qui, au niveau d'une partie d'extrémité externe, est conçu avec une course d'inclinaison dirigée vers le haut de sorte que les plaques de grattoir sont soulevées dudit transporteur de pesée (32) ou dudit deuxième transporteur à courroie.

4. Système d'alimentation selon la revendication 1, **caractérisé en ce que** la vitesse de transport dudit transporteur de pesée (32) ou dudit deuxième transporteur à courroie (36) est légèrement supérieure à la vitesse de transport de l'unité d'alimentation.

5. Système d'alimentation selon la revendication 1, **caractérisé en ce qu'**en face dudit premier transporteur à courroie (28), on prévoit un transporteur de pesée (86) pour l'enregistrement du poids des morceaux de poulet alimentés, de sorte que ledit premier transporteur à courroie (28) s'étend le long d'un certain nombre de stations d'opérateur (88), à titre d'exemple pour désosser ou couper des morceaux de poulet pour la réception individuelle des morceaux de poulet par les stations d'opérateur (88) respectives dans les compartiments respectifs entre lesdites plaques de support (30) et **en ce que** ledit deuxième transporteur de pesée (32) est adapté pour enregistrer le poids desdits morceaux de poulet reçus séparément des stations d'opérateur (88) respectives.

6. Système d'alimentation selon la revendication 5, **caractérisé en ce que** chacune desdites stations d'opérateur (88) comprend un certain nombre de dispositifs de poussée (90) qui sont adaptés pour pousser les morceaux de poulet produits individuellement dans les compartiments respectifs entre lesdites plaques de support (30) dudit premier transporteur à courroie (28).

7. Système d'alimentation selon la revendication 5, **caractérisé en ce que**, après ledit deuxième transporteur de pesée (32), il comprend un transporteur trieur (92) ayant un certain nombre de bras de poussée (94) pour la production de parties de produits avec un poids prédéfini.

8. Système d'alimentation selon les revendications 5 et 6, **caractérisé en ce que** chacune desdites stations d'opérateur comprend un certain nombre d'ouvertures de réception, chacune actionnée par son propre dispositif de poussée pour pousser les différentes parties de poulet, à titre d'exemple pour des filets de poitrine (filets papillons), des demi-filets de poitrine, des filets internes, des ailes ou des filets de cuisse, vers le bas dans les compartiments respectifs entre lesdites plaques de support (30) dudit premier transporteur à courroie (28).
